Europäisches Patentamt

European Patent Office

Office européen des brevets

(19)

(11) EP 0 562 953 B1

(12) FASCICULE DE BREVET EUROPEEN

(45) Date de publication et mention
de la délivrance du brevet:
**23.09.1998  Bulletin 1998/39**

(51) Int Cl.6: **G02B 6/34**, G02B 6/28,
G01J 3/26

(21) Numéro de dépôt: **93400754.3**

(22) Date de dépôt: **23.03.1993**

(54) **Filtre optique comprenant un interféromètre Fabry-Pérot accordable par rotation**

Durch Rotation abstimmbares Fabry-Perot-Interferometor enthaltendes optisches Filter

Optical filter containing a Fabry-Perot interferometer tunable by rotation

(84) Etats contractants désignés:
**DE ES FR GB IT SE**

(30) Priorité: **26.03.1992  FR 9203680**

(43) Date de publication de la demande:
**29.09.1993  Bulletin 1993/39**

(73) Titulaire: **ALCATEL ALSTHOM COMPAGNIE
GENERALE D'ELECTRICITE
75008 Paris (FR)**

(72) Inventeurs:
- **Chiaroni, Dominique
  F-92160 Antony (FR)**
- **Morin, Paulette
  F-91240 Saint Michel Sur Orge (FR)**

(74) Mandataire: **El Manouni, Josiane et al
COMPAGNIE FINANCIERE ALCATEL
Dépt. Propr. Industrielle,
30, avenue Kléber
75116 Paris (FR)**

(56) Documents cités:
EP-A- 315 131                    US-A- 4 712 862
US-A- 4 813 756

- JOURNAL OF LIGHTWAVE TECHNOLOGY. vol.
  7, no. 4, Avril 1989, NEW YORK US pages 615 -
  624 FRENKEL A. ET.AL. 'Angle-tuned etalon
  filters for optical channel selection in high
  density wavelength division multiplexd
  systems'
- APPLIED OPTICS. vol. 26, no. 3, 1 Février 1987,
  NEW YORK US pages 430 - 436 MALLINSON S.
  'Wavelength-selective filters for single-mode
  fiber WDM systems using FABRY-PEROT
  interferometers'

## Description

Le domaine de l'invention est celui de la transmission optique de signaux et notamment de leur démultiplexage en longueur d'onde. Plus précisément, la présente invention concerne un filtre optique comprenant un interféromètre de type Fabry-Pérot accordable par rotation placé dans un faisceau collimaté entre une fibre optique d'entrée et une fibre optique de sortie.

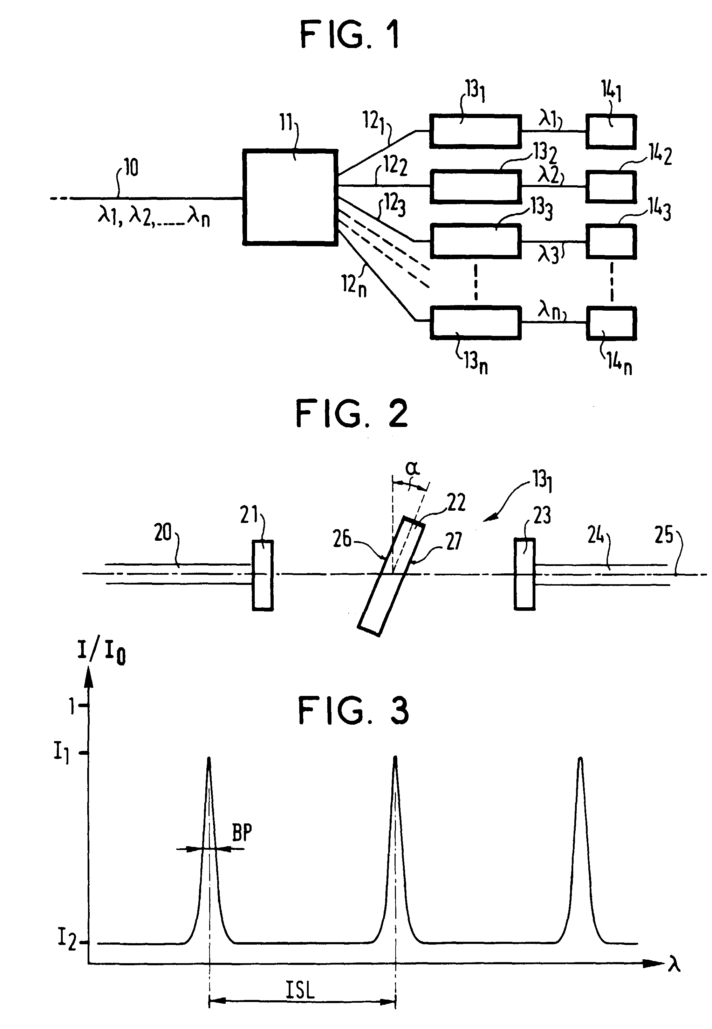

La figure 1 représente la partie réception d'un système de transmission optique comprenant des filtres optiques réalisant un démultiplexage en longueur d'onde. Cette figure ainsi que la description qui va suivre permettra de comprendre le contexte dans lequel un interféromètre de type Fabry-Pérot peut être utilisé.

Une fibre optique 10 véhicule une pluralité de signaux optiques, de longueurs d'onde respectives $\lambda 1, \lambda 2, ... \lambda n$. Ces signaux optiques sont chacun modulés par un signal différent, la modulation consistant en une modulation de fréquence ou d'amplitude. Un coupleur étoile 11 est raccordé à l'extrémité de la fibre optique 10 et fournit le signal optique reçu à autant de fibres optiques de sortie $12_1$ à $12_n$ connectées chacune à l'entrée d'un filtre étalon ajustable $13_1$ à $13_n$. Chaque filtre $13_1$ à $13_n$ est accordé sur une longueur d'onde différente du signal optique véhiculé par la fibre optique 10 et constitue, par analogie, un filtre passe-bande dans le domaine électrique. Ainsi, le filtre $13_1$ est accordé sur la longueur d'onde $\lambda 1$, le filtre $13_2$ sur la longueur d'onde $\lambda 2$ et le filtre $13_n$ sur la longueur d'onde $\lambda n$. Chaque filtre fournit un signal optique filtré de longueur d'onde donnée à un récepteur optique $14_1$ à $14_n$. Les récepteurs optiques $14_1$ à $14_n$ comprennent par exemple une photodiode de détection et des moyens de remise en forme du signal détecté permettant d'obtenir une tension proportionnelle à l'intensité lumineuse détectée par la photodiode associée.

Les filtres $13_1$ à $13_n$ peuvent chacun comprendre un interféromètre de type Fabry-Pérot accordé sur une longueur d'onde optique donnée et permettent donc le filtrage du canal optique correspondant à cette longueur d'onde. Ils réalisent de ce fait un démultiplexage en longueur d'onde.

Le document "INLINE TUNABLE ETALON FILTER FOR OPTICAL CHANNEL SELECTION IN HIGH DENSITY WAVELENGTH DIVISION MULTIPLEXED FIBRE SYSTEMS" (Disposition en ligne d'un filtre étalon accordable pour la sélection d'un canal optique dans des systèmes multiplexés de haute densité spectrale) de A. FRENKEL et C. LIN, BELL COMMUNICATIONS RESEARCH, ELECTRONIC LETTERS, 4 février 1988, vol.24, n°3, décrit un tel interféromètre Fabry-Pérot appliqué au filtrage d'un signal optique. Cet interféromètre est utilisé en rotation pour sélectionner un canal optique (une longueur d'onde) parmi ceux constituant le signal optique d'entrée véhiculé sur une fibre optique d'entrée.

La figure 2 est un schéma de principe d'un tel filtre optique utilisant un interféromètre de type Fabry-Pérot placé entre deux fibres optiques coaxiales et utilisé en rotation. Ce filtre optique est par exemple celui référencé $13_1$ sur la figure 1.

Une fibre optique d'entrée 20 véhicule un signal composite, c'est à dire comprenant une pluralité de signaux optiques de longueurs d'onde différentes, cette fibre optique correspondant par exemple à la fibre $12_1$ de la figure 1. La fibre d'entrée 20 comporte un coeur en silice de diamètre suffisamment petit pour ne permettre une transmission de lumière que selon un mode unique. La transmission est alors de type monomode. L'extrémité de la fibre 20 est collée contre une lentille 21 de collimation permettant d'obtenir un faisceau lumineux parallèle à l'axe principal 25 du filtre. Un étalon Fabry-Pérot 22 centré sur l'axe 25 est libre en rotation autour d'un de ses axes non colinéaire au vecteur d'onde de façon à modifier la différence de marche optique entre deux faisceaux sortant de l'étalon 22. L'étalon 22 constitué par une lame de faible épaisseur, par exemple en silice, est traité en réflectivité sur ses deux faces de manière à répondre à des caractéristiques optiques prédéfinies.

La longueur d'onde du signal optique sortant de l'étalon 22 est fonction de la valeur de l'angle de rotation $\alpha$ de cet étalon. Une lentille de focalisation 23 est placée en face de la lentille de collimation 21, sur l'axe 25, c'est à dire coaxialement par rapport à la lentille 21, pour concentrer le signal optique qu'elle reçoit sur le coeur d'une fibre optique de sortie 24, généralement identique à celle d'entrée 20. La lentille de focalisation 23 concentre l'énergie optique issue de l'étalon 22 sur le coeur de la fibre optique de sortie 24. La quantité d'énergie intégrée par le coeur de la fibre optique de sortie 24 est notamment fonction de l'ouverture numérique de cette fibre 24.

Le nombre maximal de longueurs d'onde (canaux) différentes pouvant être filtrées à l'aide d'un interféromètre utilisé en rotation dépend notamment de la structure de cet interféromètre, c'est à dire de son épaisseur et du traitement de surface réalisé. De plus, le parallélisme des faces, leur rugosité et leur planéité ont une influence sur la finesse. Il est également tenu compte de l'ouverture numérique de la fibre optique de sortie 24.

L'utilisation d'un étalon constitué par une lame à faces traitées est avantageuse en application statique, c'est à dire que chaque étalon d'un système de transmission optique est placé dans une position angulaire donnée afin de réaliser un filtrage d'un certain canal optique. Une lame étalon présente également des variations de caractéristiques beaucoup plus faibles que des filtres Fabry-Pérot constitués de deux lames semi-réfléchissantes séparées par une lame (couche) d'air. Ce dernier type de filtre est préférentiellement utilisé en dynamique par déplacement d'une lame par rapport à l'autre et nécessite un dispositif complexe d'asservissement de position garantissant notamment un parallélisme parfait des deux lames semi-réfléchissantes formant la cavité.

Il est à noter que l'interféromètre Fabry-Pérot utilisé en rotation peut également être constitué de deux lames réfléchissantes fixes séparées par une fine lame d'air. Dans ce cas, les lames à faces réfléchissantes sont montées dans un barillet permettant de garantir leur parallélisme.

Un interféromètre de type Fabry-Pérot est notamment caractérisé par son intervalle spectral libre (ISL), exprimé par exemple en longueur d'onde. Cet intervalle spectral libre ISL correspond à la distance séparant deux pics de transmission de l'interféromètre. Ces pics de transmission sont représentés sur la figure 3.

La figure 3 représente la caractéristique d'un interféromètre Fabry-Pérot, par exemple utilisé en rotation. La longueur d'onde figure en abscisse et le rapport d'intensité $I/I_0$ en ordonnée. $I_0$ est l'intensité optique totale du signal optique d'entrée et I l'intensité du signal optique de sortie du filtre.

Cette caractéristique présente une succession de pics de transmission d'intensité maximale $I_1$, d'intensité minimale $I_2$ et deux pics de transmission adjacents sont distants d'un intervalle spectral libre ISL correspondant à une différence de longueurs d'onde donnée. Deux longueurs d'onde du signal optique d'entrée doivent être séparées de moins de la valeur de l'intervalle spectral libre ISL pour qu'un filtrage du signal optique d'entrée puisse être effectué. L'intervalle spectral libre en fréquence est donné par la relation:

$$ISL = \frac{c}{2nL.\cos\theta r}$$

où c est la vitesse de la lumière, n l'indice de réfraction de l'étalon, L l'épaisseur de l'étalon et $\theta r$ l'angle de réfraction du signal optique à l'intérieur de l'étalon. Cet angle de réfraction dépend de l'angle d'incidence du rayon lumineux du signal optique d'entrée, et donc de l'angle de rotation de l'interféromètre. Si l'angle de rotation augmente, l'angle de réfraction augmente également, $\cos\theta r$ diminue et ISL, exprimé en longueur d'onde, diminue. De ce fait, pour un spectre du signal d'entrée donné, la fréquence du signal de sortie augmente.

On voit donc que faire évoluer l'angle de réfraction revient à faire évoluer l'intervalle spectral libre. Si l'angle augmente, ISL diminue en longueur d'onde et on constate une translation des pics de transmission vers les basses longueurs d'onde.

L'intensité normalisée est une fonction de la phase ou de la longueur d'onde. Dans le cas d'un interféromètre Fabry-Pérot parfait (parallélisme, planéité et rugosité optimaux) éclairé par une onde plane, elle s'exprime par la fonction d'Airy. Cette fonction est $2\pi$ périodique et parcourt tout le domaine spectral. Ainsi, si on se déplace d'un intervalle spectral libre, on aura parcouru tout le spectre du signal d'entrée. C'est pourquoi on définit l'accordabilité d'un filtre optique, comprenant un interféromètre de type Fabry-Pérot, par la plage de longueur d'onde nécessaire pour se déplacer d'un pic de transmission au pic suivant.

On définit ainsi la finesse comme étant le rapport de l'ISL sur la bande passante (largeur du pic de transmission à mi-hauteur):

$$F = \frac{ISL}{BP}$$

Enfin, le facteur de contraste C égal à:

$$C = -10 \log\left(\frac{I_2}{I_1}\right)$$

où $I_1$ et $I_2$ sont respectivement l'intensité maximale et minimale transmises.

Cependant, la rotation de l'étalon provoque une dégradation de la bande passante accompagnée d'un affaiblissement de l'amplitude des signaux optiques transmis.

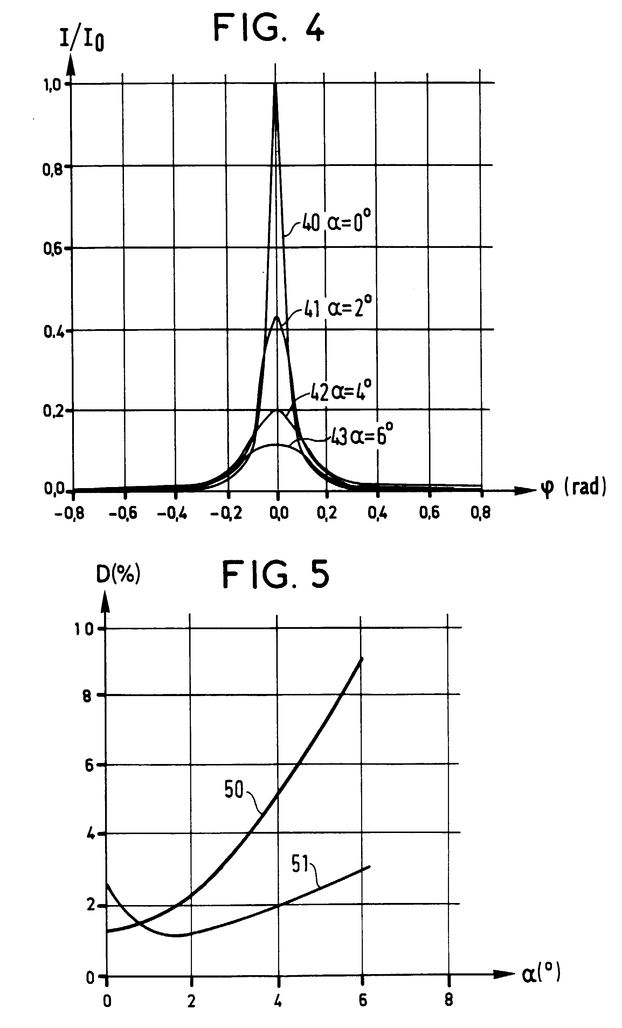

La figure 4 représente une simulation de la variation de l'amplitude et de la bande passante d'un pic de transmission pour différents angles de rotation de l'interféromètre Fabry-Pérot.

Les caractéristiques 40 à 43 représentent l'évolution des pics de transmission à différents angles $\alpha$ de rotation de l'étalon Fabry-Pérot pour des angles $\alpha$ de rotation de l'étalon de 0,2,4 et 6°, lorsque le filtre est accordé sur des signaux optiques d'entrée d'intensité $I_0$.

On constate que lorsque l'incidence est normale ($\alpha=0$), le pic de transmission permet de passer presque l'intégralité d'une longueur d'onde sélectionnée, c'est à dire qu'il y a peu d'atténuation. De plus, les flancs du pic 40 sont raides et on assure de ce fait une bonne réjection des longueurs d'onde optiques voisines de celle pour laquelle l'accord est obtenu (bande passante étroite).

En revanche, pour un accord réalisé avec une rotation de 2° (caractéristique 41), on observe une atténuation de l'intensité transmise, accompagnée d'un élargissement de la bande passante. Ce phénomène s'accentue au fur et à mesure que l'angle $\alpha$ augmente et a pour conséquence l'apparition d'une diaphonie entre des canaux adjacents proches.

En première approche (canaux d'amplitude normalisée, égaux à 1 et de largeur spectrale infiniment petite), on définit la diaphonie par le rapport:

$$D = 2 . \frac{I_1}{I_0}$$

où $I_0$ est l'intensité maximale de la fonction de transfert et $I_1$ l'intensité en une valeur de phase correspondant à la position du canal adjacent.

Cette diaphonie entraîne une déformation des signaux optiques en sortie du filtre et est représentée par la courbe 50 de la figure 5.

En abscisse figure l'angle $\alpha$ de rotation de l'interféromètre en degrés et en ordonnée la diaphonie en %.

A cause de la diaphonie, lorsque le signal modulant du signal optique est de type numérique, on assiste alors à une fermeture importante du diagramme de l'oeil pour les signaux optiques dont les longueurs d'onde nécessitent, pour leur filtrage, un angle $\alpha$ important, lorsque la densité de signaux optiques est grande dans l'intervalle spectral libre, et le taux d'erreur de transmission augmente.

Pour pallier cet inconvénient, il est alors nécessaire de limiter le nombre de canaux de longueurs d'onde différentes dans un intervalle spectral libre donné. En respectant un intervalle suffisamment important entre deux longueurs d'onde adjacentes, on peut de ce fait limiter la diaphonie inter-canaux et donc conserver un taux d'erreur acceptable.

Un palliatif consiste à augmenter la réflectivité de l'étalon Fabry-Pérot, mais cette opération s'accompagne d'une diminution de la bande passante BP, et n'est donc pas adaptée au filtrage de signaux d'entrée présentant un encombrement spectral variable. Par exemple, en modulation d'amplitude directe, la modulation de fréquence parasite (chirp) peut augmenter de manière non négligeable l'encombrement spectral du canal à filtrer.

Il est également possible de disposer deux filtres Fabry-Pérot en cascade pour augmenter la finesse globale. Une augmentation de la finesse entraîne une augmentation de la résolution et donc une diminution de la diaphonie. Cependant, les pertes énergétiques sont doublées et la bande passante diminue également. Cette solution ne convient donc pas non plus pour des signaux optiques d'encombrement spectral important. Cette solution est également plus onéreuse.

Le document Journal of Lightwave Technology, vol.7, No 4, pages 615-624, A. FRENKEL et C. LIN, "Angle-tuned Etalon Filters For Optical Channel Selection in High Density Wavelength Division Muliplexed Systems" décrit un filtre optique comprenant un (ou deux) interféromètre(s) de type Fabry-Pérot utilisé en rotation et disposé entre une source optique collimatée et un récepteur optique collimaté. Les auteurs de ce document considèrent que la perte de puissance transmise, due au déplacement du faisceau lumineux provoqué par l'étalon ou les deux étalons, est négligeable, pour des étalons ayant une épaisseur inférieure à 1mm. Mais ce document ne considère pas le problème de la réduction des performances de réjection, et donc le problème de diaphonie qui en résulte.

La présente invention a notamment pour objectif de remédier à ces inconvénients.

Plus précisément, un des objectifs de l'invention est de diminuer la diaphonie existant entre un canal filtré et un canal proche de ce canal filtré afin de diminuer le taux d'erreur de transmission de signaux optiques dans un système, par exemple un système de commutation optique. Une telle diminution de diaphonie dans la plage d'accordabilité (ISL) permettrait d'augmenter le contraste entre les signaux et donc la résolution du filtre.

Un autre objectif de l'invention est de conserver une largeur de bande passante minimale sur toute la largeur de la plage d'accord, c'est à dire pour des angles d'inclinaison de l'interféromètre différents.

Ces objectifs, ainsi que d'autres qui apparaîtront par la suite, sont atteints grâce à un filtre optique comprenant un interféromètre de type Fabry-Pérot utilisé en rotation, une source optique et un récepteur optique, ledit interféromètre étant disposé entre ladite source optique et ledit récepteur optique et réalisant un filtrage d'un signal optique d'entrée issu de ladite source optique, ledit signal optique d'entrée se propageant sensiblement selon un mode unique, et fournissant un signal optique filtré audit récepteur optique, ledit récepteur optique comprenant une surface de réception qui intègre la densité de puissance dudit signal optique filtré, ledit filtre optique étant **caractérisé** en ce qu'il comprend une lame effectuant une réfraction dudit signal optique filtré, permettant de modifier la position relative dudit signal optique filtré, par rapport à ladite surface de réception dudit récepteur optique .

On peut ainsi optimiser l'énergie intégrée dans la surface de réception du récepteur optique, et optimiser la réjection des canaux proches.

Selon une application préférentielle de l'invention, ladite source optique comprend une fibre optique d'entrée monomode coopérant avec une lentille de collimation et ledit récepteur optique comprend une lentille de focalisation coopérant avec une fibre optique de sortie, la surface présentée par le coeur de ladite fibre optique de sortie constituant ladite surface de réception.

On assure ainsi une optimisation de transmission de l'énergie du signal optique filtré en fonction de l'angle de rotation de l'interféromètre. Cette optimisation consistant à concentrer le maximum d'énergie optique sur la lentille de focalisation assure donc qu'une énergie maximale soit effectivement transmise coaxialement à la fibre optique de sortie.

Selon un premier mode de réalisation de l'invention, préférentiellement, ladite lame fait un angle par rapport audit signal optique d'entrée égal à celui dudit interféromètre.

La lame et l'interféromètre sont alors solidaires et on optimise les caractéristiques de transmission sur toute la plage d'accord, c'est à dire sur tout l'intervalle spectral libre. Le flux du signal optique filtré correspond à l'intégrale de la densité de puissance de ce signal optique filtré.

Dans une variante de réalisation, cette lame a une position angulaire fixe. On privilégie dans ce cas certains pics de transmission.

L'interféromètre est soit constitué par un étalon à faces traitées, soit par un jeu de deux lames fixes séparées par une lame d'air.

La première solution présente l'avantage d'assurer un parallélisme parfait entre les faces réflechissantes de l'interféromètre Fabry-Pérot.

D'autres caractéristiques et avantages de l'invention apparaîtront à la lecture de la description suivante d'un mode de réalisation préférentiel, donné à titre illustratif et non limitatif, et des dessins annexés dans lesquels:

- la figure 1 représente la partie réception d'un système de transmission optique dans lequel des interféromètres Fabry-Pérot sont utilisés;
- la figure 2 représente un interféromètre Fabry-Pérot de type connu placé entre deux fibres optiques;
- la figure 3 représente la caractéristique d'un filtre de type Fabry-Pérot, cette caractéristique comprenant des pics de transmission équidistants;
- la figure 4 représente une simulation de la variation de l'amplitude et de la bande passante d'un pic de transmission pour différents angles de rotation de l'étalon Fabry-Pérot;
- la figure 5 représente la variation de la diaphonie inter-canaux en fonction de l'angle de rotation de l'interféromètre;
- la figure 6 représente un mode de réalisation préférentiel du filtre optique de la présente invention;
- la figure 7 représente l'évolution de la densité de puissance en sortie de l'interféromètre pour différents angles de rotation de cet interféromètre;
- la figure 8 représente une simulation de l'évolution de la position du maximum de densité de puissance optique par rapport à l'axe principal du filtre optique en fonction de l'angle de rotation de l'interféromètre, pour des longueurs d'onde non accordées;
- la figure 9 représente une simulation de l'évolution des caractéristiques d'un filtre optique comprenant une lame correctrice selon l'invention.

Les figures 1 à 5 ont été décrites précédemment en référence à l'état de la technique.

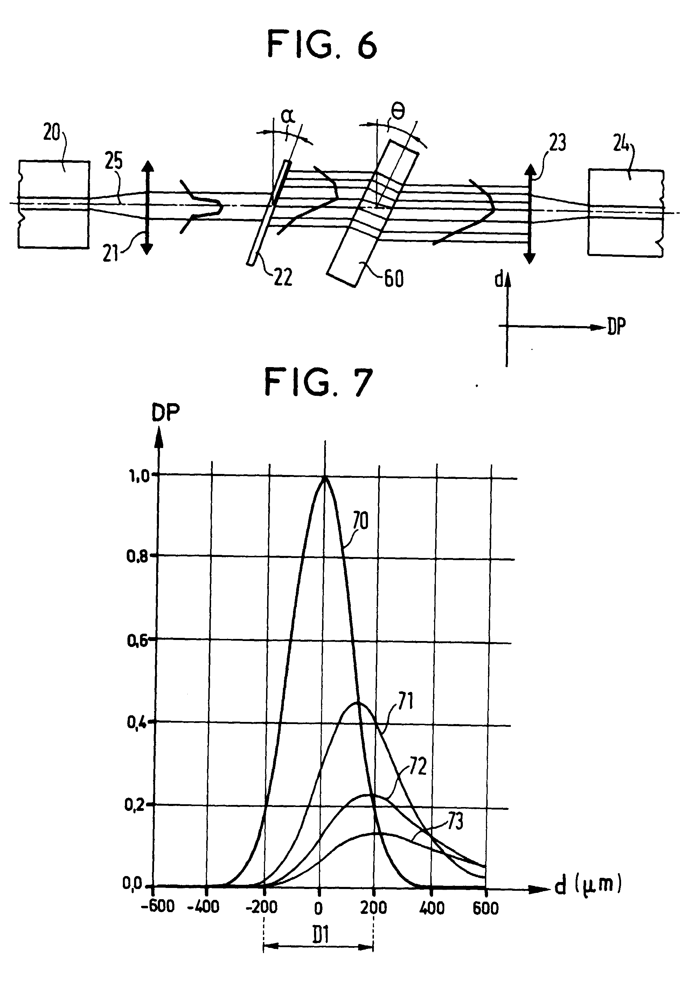

L'invention consiste à récupérer, en sortie de l'interféromètre, un maximum d'énergie optique du signal filtré, pour diriger cette énergie sur la lentille de focalisation associée à la fibre optique de sortie. L'interféromètre représenté dans la figure 6 est constitué par un étalon 22 (lame à faces traitées).

Il a été précédemment mis en évidence que la rotation de l'interféromètre déplace les différents pics de transmission par rapport au spectre du signal d'entrée véhiculé sur la fibre monomode 20 coopérant avec la lentille de collimation 21. Ce déplacement des pics de transmission permet de modifier l'accord du filtre sur une longueur d'onde du signal d'entrée donnée.

Cependant, cette rotation provoque également un étalement de l'énergie optique, c'est à dire que plus l'angle que fait l'étalon 22 avec la perpendiculaire à l'axe 25 principal du filtre est important, plus l'énergie optique est étalée.

Avec une fibre d'entrée monomode, la distribution de l'énergie optique du signal d'entrée évolue selon une Gaussienne et le signal filtré à la sortie de l'étalon 22 est donc constitué par une somme de Gaussiennes étalées spatialement.

En coordonnées cartésiennes, l'intensité normalisée du signal optique à l'entrée de la fibre réceptrice 24 peut par exemple s'exprimer sous la forme:

$$\frac{I}{I_0} = A.\frac{\displaystyle\int_{-Wx}^{+Wx}\int_{-Wy}^{+Wy} F(x,y).[(\sum_{p=1}^{\infty} U(p,x))^2 + (\sum_{p=1}^{\infty} V(p,x))^2]dS}{\displaystyle\int_{-Wx}^{+Wx}\int_{-Wy}^{+Wy} F_0(x,y)dS}$$

où:

- A est une constante représentative de la réfraction de la Gaussienne à l'entrée de la fibre d'entrée et du coefficient de transmission;
- $F_0(x,y)$ représente la répartition Gaussienne de l'intensité optique entrant dans l'interféromètre;
- F(x,y) est un terme spatial indépendant du déphasage;
- U(p,x) et V(p,x) sont des termes dépendants de la réflectivité, du déphasage et du décalage spatial des fonctions Gaussiennes;
- Wx et Wy correspondent respectivement aux rayons de la lentille de focalisation et de collimation, la lentille de focalisation étant habituellement placée coaxialement par rapport à la lentille de collimation et au centre de l'interféromètre.

Cette somme de Gaussiennes correspond à une densité de puissance, comme représenté sur la figure 7.

La figure 7 représente une simulation de l'évolution de la densité de puissance en sortie de l'interféromètre pour différents angles de rotation de cet interféromètre. L'interféromètre considéré est constitué par un étalon à faces traitées présentant une réflectivité de 97%, l'intervalle spectral libre étant de 5,5 nm. La différence maximale entre les longueurs d'onde des signaux composant le signal d'entrée doit donc être inférieure à 5,5 nm.

Les courbes 70 à 73 correspondent respectivement à l'évolution de la densité de puissance en sortie de l'étalon pour des angles de rotation de l'étalon de 0,2,4 et 6°. En abscisse figure une distance d (en µm) correspondant à la distance des points de l'enveloppe de la densité de puissance par rapport à l'axe principal 25 de la figure 6. En ordonnée est représentée la densité de puissance DP. Ces courbes ont été obtenues pour un déphasage optique des Gaussiennes de sortie de l'étalon égal à zéro, modulo $2\pi$, c'est à dire que les Gaussiennes sont en phase (transmission d'énergie maximale). On se situe donc à chaque fois dans une position d'accord de longueur d'onde.

On constate que pour un angle de rotation de 0° (courbe 70), le maximum de densité d'énergie est égal à 1 et situé sur l'axe principal 25. De plus, la distribution est symétrique. Toutes les interférences de type Gaussienne sont ici centrées sur l'axe principal 25 et se somment de façon constructive.

Pour un angle de rotation de 2°, on observe une importante atténuation de la densité de puissance optique, due aux caractéristiques de l'étalon. On observe également un déplacement spatial du maximum de densité de puissance qui quitte l'axe principal (référence 0 sur l'axe des abscisses). Or, la lentille de focalisation 23 présente un diamètre limité, par exemple de l'ordre de 400 µm, représenté par D1 sur la figure 7. Dans le cas où l'angle de rotation de l'étalon est nul (courbe 70), la densité de puissance arrivant sur cette lentille de focalisation est importante. Cependant, pour un angle de rotation de 2°, cette densité de puissance arrivant sur la lentille de focalisation est fortement diminuée. Il s'en suit une perte de puissance optique qui passe à côté de la lentille de focalisation et qui n'est donc pas appliquée sur la surface présentée par le coeur de la fibre optique 24 de sortie. Dans ce cas, l'énergie optique intégrée par la surface de réception (coeur) de la fibre optique 24 de sortie est diminuée.

Ce phénomène s'accentue avec l'inclinaison de l'étalon, comme représenté par les courbes 72 et 73.

L'étalement spatial de la densité de puissance s'accompagne également d'une modification de la distribution d'énergie, c'est à dire que, pour des angles de rotation importants, cette distribution ne suit plus une répartition Gaussienne, mais a tendance à s'étaler, comme il est visible sur les courbes 72 et 73. On obtient alors des densités de puissances dissymétriques pour des angles de rotation importants.

Lorsque l'angle de rotation est nul (courbe 70), les multiples réflexions restent concentriques et ne témoignent ni de cet élargissement, ni de cette dissymétrie.

Ce déplacement spatial, uniquement dû à la rotation de l'étalon, a pour conséquence que la valeur maximale de l'intégrale de la densité de puissance, c'est à dire le flux optique maximal du signal optique filtré disponible à la sortie de la lentille de focalisation 23, n'est pas intégré dans le coeur de la fibre optique 24 de sortie. En effet, même en augmentant le diamètre de la lentille de focalisation 23, l'ouverture numérique du coeur de la fibre optique de sortie reste limité et on observe alors une augmentation du taux d'erreur de transmission.

Par ailleurs, le phénomène d'étalement et de déformation de l'enveloppe de la densité de puissance pour un déphasage nul s'accompagne d'un déplacement du maximum de densité de puissance optique vers l'axe principal lorsque l'angle de rotation de l'étalon augmente, pour des déphasages non nuls, c'est à dire hors accord.

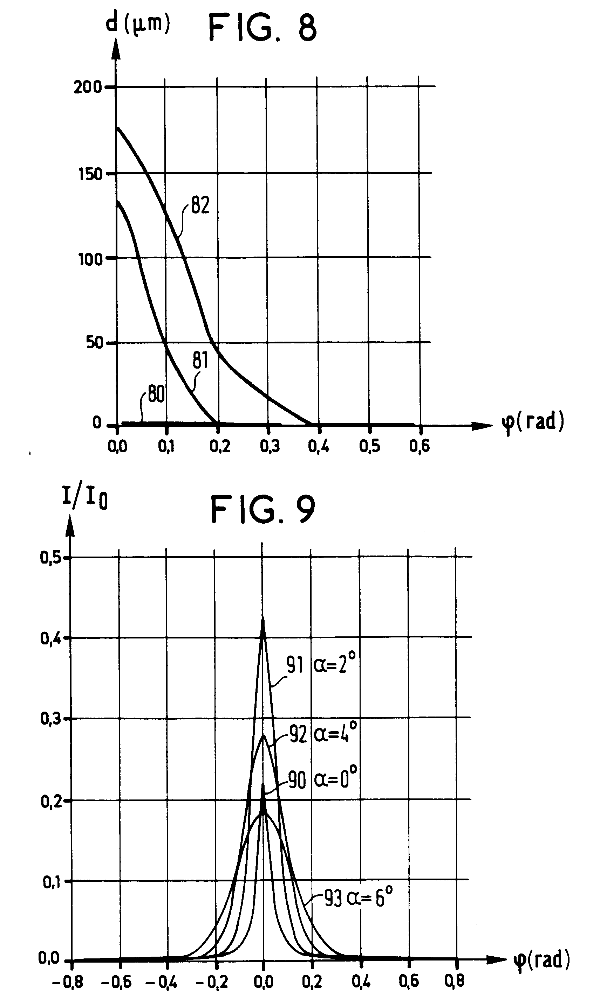

La figure 8 met ce phénomène en évidence. Elle représente trois courbes 80,81 et 82 correspondant respectivement à la position (en µm) du maximum de densité de puissance optique en sortie de l'étalon 22 en fonction de la différence de marche optique en radians, et ce pour des angles de rotation de l'étalon 22 de 0,2 et 4° respectivement.

Ces courbes ont été obtenues par simulation et montrent qu'en phase non nulle, on concentre une densité non désirable de puissance optique dans la fibre de sortie. Par exemple, pour un angle de rotation de 4° de l'étalon, on constate qu'un maximum de densité de puissance est placé au centre de la lentille de focalisation 23 pour une différence de marche optique de 0,4 radians. Ce maximum de densité de puissance optique, qui est concentré dans le coeur de la fibre optique de sortie et y est intégré, constitue un signal parasite dès lors que les canaux de fréquence du signal optique d'entrée sont très proches les uns des autres. Ce phénomène s'accentue avec l'angle de rotation de l'étalon.

Ainsi, deux phénomènes tendent à limiter les performances d'un filtre optique:

- en situation d'accord, le maximum de densité d'énergie se déplace perpendiculairement à l'axe principal du filtre optique et le maximum de flux optique ne peut être intégré dans la fibre optique de sortie. En conséquence, l'intensité optique du signal filtré est diminuée.
- lorsque les signaux optiques filtrés ne sont pas en phase, c'est à dire lorsqu'il existe un déphasage entre les signaux filtrés, ce déphasage étant obtenu à dessein pour éliminer un signal de longueur d'onde proche de celle d'un signal filtré, le maximum de densité d'énergie de ce canal à éliminer se rapproche de l'axe principal du filtre et il en résulte une mauvaise réjection des canaux adjacents à celui filtré.

Ces deux inconvénients se conjuguent pour augmenter la diaphonie.

La présente invention propose de prévoir des moyens permettant de compenser le déplacement du maximum de l'intégrale de la densité de puissance par rapport à l'axe principal d'un filtre optique, afin de recentrer ce maximum dans la pupille réceptrice et donc dans le coeur de la fibre optique de sortie. Ces moyens constituent donc une lame effectuant une réfraction du signal optique filtré, permettant une correction de la position du signal optique filtré par rapport à la fibre optique de sortie.

Dans le mode de réalisation de la figure 6, ce recentrage est assuré par une lame 60 coaxiale assurant une réfraction des signaux optiques filtrés, de telle sorte que le maximum de l'énergie optique constituée par la somme des distributions Gaussiennes précitée soit ramené sur l'axe 25 principal du filtre. Pour cela, la lame 60 est inclinée d'un angle $\theta$.

La réfraction des signaux optiques filtrés permet de concentrer la valeur maximale du flux optique filtré dans le coeur de la fibre 24 de sortie. Cette opération est équivalente à déplacer la lentille de focalisation et la fibre de sortie associée, dont le diamètre D1 est représenté sur la figure 7, de telle sorte qu'elle reçoive le maximum de densité de puissance optique. Dans ce mode de réalisation, tous les éléments sont centrés sur le même axe principal 25.

L'angle de rotation $\theta$ de la lame 60 coaxiale peut être optimisé, pour une longueur d'onde donnée à filtrer, en mesurant la puissance totale du signal dans la fibre optique 24 de sortie.

La lame 60 représentée est placée entre l'étalon 22 et la lentille de focalisation 23, mais elle peut également être placée entre la lentille de collimation 21 et l'étalon 22. Sa position n'est donc pas prépondérante. En revanche, il est nécessaire que la fibre optique véhiculant le signal d'entrée soit de type monomode, afin que le signal optique d'entrée présente une répartition de type Gaussienne. La fibre optique de sortie 24 peut être de type monomode ou multimode. Si elle est de type monomode, le filtre optique présente une symétrie permettant de l'utiliser en transmission bidirectionnelle.

Si la lame 60 est mobile avec l'étalon 22, c'est à dire que $\theta=\alpha$, la correction effectuée l'est sur toute la plage d'accordabilité du filtre optique. En revanche, si elle est fixe, seuls certaines longueurs d'onde seront favorisées par rapport aux autres longueurs d'onde du signal d'entrée.

La correction apportée par la présente invention peut être appréciée au regard de la figure 9.

La figure 9 représente une simulation de l'évolution des caractéristiques d'un filtre optique comprenant une lame correctrice selon l'invention. Les caractéristiques 90 à 93 correspondent respectivement à l'évolution de l'intensité I optique de sortie par rapport à l'intensité optique totale $I_0$ d'un signal d'entrée, pour des angles de rotation de 0,2,4 et 6°. Ces caractéristiques sont à comparer avec celles de la figure 4, obtenues sans lame correctrice.

On constate une nette diminution du pic pour $\alpha=0°$ (courbe 90), due à une réflection de la lame correctrice lorsque le signal incident est normal à la surface de l'étalon. Cette dégradation du pic n'est pas gênante puisque dans un cas réel d'utilisation, on ne travaille pas à angle de rotation nul pour s'affranchir des problèmes de réflection vers les sources émettrices. Il est donc souhaitable de supprimer les moyens de correction de l'invention lorsque l'incidence est normale.

Pour α=2° (courbe 91), l'atténuation est sensiblement égale à celle obtenue sans lame correctrice et la bande passante est plus étroite. La puissance du signal optique transmis est donc sensiblement égale mais la réjection des longueurs d'onde adjacentes à celle filtrée est nettement améliorée.

Pour α=4° (courbe 92), l'atténuation du filtre est bien inférieure à celle du même filtre sans lame correctrice, et la bande passante est également plus faible. Ce phénomène est accentué pour un angle α de rotation de l'étalon de 6° (courbe 93).

L'évolution de la diaphonie D est représentée par la courbe 51 de la figure 5, cette évolution étant obtenue en utilisant une lame correctrice selon l'invention. On constate donc que la correction apportée par la lame de réfraction permet de sensiblement améliorer cette diaphonie. On observe également une rotation de la caractéristique de diaphonie. A angle nul, l'énergie intégrée dans le coeur de la fibre réceptrice est moins importante mais le pic de transmission n'est pas déformé (voir figure 9). En effet, les différents fronts d'onde en sortie de l'étalon restent concentriques et le décalage introduit par la réfraction ne change pas ou peu le nombre d'interférences constructives. Ainsi, la diaphonie, pour une distance inter-canal donnée, est très peu dégradée.

Des mesures ont été effectuées avec un étalon à 97% de réflectivité, pour une longueur d'onde d'utilisation de 1555 nm et un intervalle spectral libre de 5,5 nm. Le gain obtenu est de 6 dB sur toute la plage d'accordabilité.

Globalement, l'énergie intégrée en phase non nulle à l'extérieur de la bande passante est inférieure à celle intégrée sans lame correctrice et la densité d'énergie provenant d'interférences constructives et recentrée sur la lentille de focalisation est plus importante. Le confinement de l'énergie utile est ainsi amélioré et on obtient un gain plus important de transmission en phase nulle, et une déformation du pic diminuant légèrement la bande passante. Les flancs du pic sont plus raides et rejettent d'autant mieux les énergies situées à des fréquences extérieures à la bande passante.

Les lentilles de collimation et de focalisation sont par exemple des lentilles à gradient d'indice collées contre les fibres optiques d'entrée et de sortie respectivement. Ce collage s'effectue de manière à conserver la distance focale entre le coeur des fibres et les plans des lentilles.

La lame de réfraction est préférablement traitée anti-reflet. Les éventuels problèmes de parallélisme des faces de la lame sont rattrapés par l'angle de rotation θ de la lame.

Bien entendu, l'interféromètre peut également être constitué par exemple par un jeu de deux lames séparées par une lame d'air et maintenues solidaires dans un barillet. Dans ce cas, seules les surfaces des lames qui sont séparées par la lame d'air sont traitées pour leur conférer une certaine réflectivité.

L'amélioration des performances a pour principal intérêt la possibilité d'augmenter le nombre de canaux dans un système optique à démultiplexage en longueurs d'onde. La réflectivité de l'interféromètre peut être limitée, de façon à ne pas pénaliser la transmission en des valeurs supérieures à environ 98% sur toute la plage d'accordabilité.

Bien entendu, la présente invention n'est pas limitée à l'application décrite ci-dessus, c'est à dire au filtrage de canaux optiques d'un signal d'entrée véhiculé par une fibre d'entrée monomode. De façon générale, la fibre d'entrée monomode et la lentille de collimation associées à une source lumineuse constituent une source optique fournissant un signal optique d'entrée se propageant selon un mode unique. Cette source optique peut notamment être remplacée par un guide optique intégré, constitué par exemple par un guide en silice de structure hybride comprenant un émetteur laser, un ou plusieurs amplificateurs de lumière, etc... De même, la fibre optique de sortie entre dans la constitution d'un récepteur optique qui peut être remplacé par une photodiode de détection. La surface présentée par la photodiode de détection est alors celle qui réalise l'intégration de la densité de puissance du signal optique filtré et une détection optimale est réalisée grâce à la lame effectuant une réfraction du signal optique filtré, permettant de modifier la position relative du signal optique filtré par rapport à cette surface de réception.

## Revendications

1. Filtre optique comprenant un interféromètre (22) de type Fabry-Pérot utilisé en rotation, une source optique (20,21) et un récepteur optique (24), ledit interféromètre (22) étant disposé entre ladite source optique (20,21) et ledit récepteur optique (24) et réalisant un filtrage d'un signal optique d'entrée issu de ladite source optique (20,21), ledit signal optique d'entrée se propageant sensiblement selon un mode unique, et fournissant un signal optique filtré audit récepteur optique (24), ledit récepteur optique (24) comprenant une surface de réception qui intègre la densité de puissance dudit signal optique filtré ; ledit filtre étant **caractérisé** en ce qu'il comprend une lame (60) effectuant une réfraction dudit signal optique filtré, permettant de modifier la position relative dudit signal optique filtré par rapport à ladite surface de réception dudit récepteur optique (24).

2. Filtre optique selon la revendication 1, caractérisé en ce que ladite source optique comprend une fibre optique (20) d'entrée monomode coopérant avec une lentille (21) de collimation et en ce que ledit récepteur optique comprend une lentille (23) de focalisation coopérant avec une fibre optique (24) de sortie, la surface présentée par le coeur de ladite fibre optique (24) de sortie constituant ladite surface de réception.

3. Filtre optique selon l'une des revendications 1 et 2, caractérisé en ce que ladite lame (60) fait un angle (Θ) par rapport audit signal optique d'entrée égal à celui (α) dudit interféromètre (22).

4. Filtre optique selon la revendication 2, caractérisé en ce que ladite lame (60) a une position angulaire fixe.

5. Filtre optique selon l'une des revendications 1 à 4, caractérisé en ce que ledit interféromètre est constitué par un étalon (22) à faces traitées.

6. Filtre optique selon l'une des revendications 1 à 4, caractérisé en ce que ledit interféromètre est constitué par un jeu de deux lames fixes séparées par une lame d'air.

**Patentansprüche**

1. Optisches Filter, das ein Interferometer (22) vom Fabry-Perot-Typ, das in Rotation verwendet wird, eine Lichtquelle (20, 21) und einen optischen Empfänger (24) umfaßt, wobei das Interferometer (22) zwischen der Lichtquelle (20, 21) und dem optischen Empfänger (24) angeordnet ist und eine Filterung eines von der Lichtquelle (20, 21) stammenden optischen Eingangssignals ausführt, wobei sich das optische Eingangssignal im wesentlichen gemäß einem einzigen Modus ausbreitet, und dem optischen Empfänger (24) ein gefiltertes optisches Signal liefert, wobei der optische Empfänger (24) eine Empfangsoberfläche umfaßt, die die Leistungsdichte des gefilterten optischen Signals integriert, **dadurch gekennzeichnet,** daß es ein Plättchen (60) umfaßt, das eine Brechung des gefilterten optischen Signals ausführt, die gestattet, die relative Position des gefilterten optischen Signals in bezug auf die Empfangsoberfläche des optischen Empfängers (24) zu modifizieren.

2. Optisches Filter nach Anspruch 1, dadurch gekennzeichnet, daß die Lichtquelle eine Einmoden-Eingangslichtleitfaser (20) umfaßt, die mit einer Kollimationslinse (21) zusammenarbeitet, und daß der optische Empfänger eine Fokussierungslinse (23) umfaßt, die mit einer Ausgangslichtleitfaser (24) zusammenarbeitet, wobei die vom Kern der Ausgangslichtleitfaser (24) gebotene Oberfläche die Empfangsoberfläche bildet.

3. Optisches Filter nach einem der Ansprüche 1 und 2, dadurch gekennzeichnet, daß das Plättchen (60) in bezug auf das optische Eingangssingal einen Winkel (θ) gleich demjenigen (α) des Interferometers (22) bildet.

4. Optisches Filter nach Anspruch 2, dadurch gekennzeichnet, daß das Plättchen (60) eine feste Winkelposition hat.

5. Optisches Filter nach einem der Ansprüche 1 bis 4, dadurch gekennzeichnet, daß das Interferometer aus einem Etalon (22) mit bearbeiteten Flächen besteht.

6. Optisches Filter nach einem der Ansprüche 1 bis 4, dadurch gekennzeichnet, daß das Interferometer aus einem Satz von zwei festen Plättchen besteht, die durch einen Luftstreifen getrennt sind.

**Claims**

1. Rotation tuned optical filter comprising a Fabry-Perot type interferometer (22), an optical source (20, 21) and an optical receiver (24), said interferometer (22) being disposed between said optical source (20, 21) and said optical receiver (24) and filtering an input optical signal from said optical source (20, 21), said input optical signal propagating substantially in a single mode, and supplying a filtered optical signal to said optical receiver (24), said optical receiver (24) comprising a receiving face which integrates the power density of said filtered optical signal; said filter being characterised in that it comprises a plate (60) refracting said filtered optical signal to modify the position of said filtered optical signal relative to said receiving face of said optical receiver (24).

2. Optical filter according to claim 1 characterised in that said optical source comprises a monomode input optical fibre (20) cooperating with a collimator lens (21) and in that said optical receiver comprises a focusing lens (23) cooperating with an output optical fibre (24), the face of the core of said output optical fibre (24) constitutes said receiving face.

3. Optical filter according to claim 1 or claim 2 characterised in that said plate (60) is at an angle ($\theta$) to said input optical signal equal to that (a) of said interferometer (22).

4. Optical filter according to claim 2 characterised in that said plate (60) has a fixed angular position.

5. Optical filter according to any one of claims 1 to 4 characterised in that said interferometer comprises a treated face etalon (22).

6. Optical fibre according to any one of claims 1 to 4 characterised in that said interferometer comprises a set of two fixed airspaced plates.

# FIG. 1

# FIG. 2

# FIG. 3

FIG. 4

FIG. 5

# FIG. 6

# FIG. 7

FIG. 8

FIG. 9